# EUROPÄISCHE PATENTSCHRIFT

(11) **EP 3 127 505 B1**
(45) Veröffentlichungstag und Bekanntmachung des Hinweises auf die Patenterteilung: **01.07.2020**
(21) Anmeldenummer: 16167397.5
(22) Anmeldetag: 28.04.2016
(51) Int. Cl.: A61C 5/64

(54) **LAGER- UND MISCHVORRICHTUNG ZUR HERSTELLUNG EINES DENTALPRÄPARATS, SOWIE VERWENDUNG UND VERFAHREN ZU DEREN HERSTELLUNG**
STORAGE AND MIXING DEVICE FOR MANUFACTURING A DENTAL PREPARATION, AND USE AND METHOD FOR THEIR PREPARATION
DISPOSITIF DE STOCKAGE ET DE MELANGE DESTINE A LA FABRICATION D'UN MATERIAU DENTAIRE, SON UTILISATION ET SON PROCEDE DE FABRICATION

(30) Priorität: 02.07.2015 DE 102015212394
(43) Veröffentlichungstag der Anmeldung: 08.02.2017
(73) Patentinhaber: VOCO GmbH, 27472 Cuxhaven (DE)
(72) Erfinder: Barg, Dr. Andree, 21762 Otterndorf (DE); Plaumann, Manfred Thomas, 27472 Cuxhaven (DE)
(74) Vertreter: Eisenführ Speiser

(56) Entgegenhaltungen:
- DE-A1- 2 056 035
- JP-A- 2002 191 622
- US-A1- 2002 098 462
- US-A1- 2005 205 452
- US-A1- 2007 272 567

## Beschreibung

Die vorliegende Erfindung betrifft eine Lager- und Mischvorrichtung nach Anspruch 1, zur Herstellung eines Dentalpräparats aus zwei, drei oder mehr Mischkomponenten, wobei die Lager- und Mischvorrichtung eine einzelne Kammer oder zwei oder mehr in einem Lagerzustand voneinander getrennte, die Mischkomponenten enthaltende Kammern aufweist, sowie ein Verfahren zur Herstellung einer Lager- und Mischvorrichtung gemäß Anspruch 11, sowie die Verwendung einer Lager- und Mischvorrichtung gemäß Anspruch 15.

Unter dem Begriff des Dentalpräparats wird im Zusammenhang mit der vorliegenden Erfindung ein Mehrkomponentensystem wie beispielsweise ein Adhäsiv, Füllungsmaterial, Unterfüllungsmaterial, Kronen- und Brückenmaterial, Stumpfaufbaumaterial, Befestigungsmaterial im Allgemeinen (insbesondere Befestigungszement) und Glasionomer verstanden. Unter dem Begriff nicht verstanden wird erfindungsgemäß ein Amalgam oder eine Amalgammischung.

Lager- und Mischvorrichtungen der eingangs bezeichneten Art dienen dem Zweck, das Dentalpräparat in Komponenten zerlegt über einen möglichst langen Zeitraum lagerfähig zu halten. Misch- und Applikationsvorrichtungen für Dentalpräparate, die beispielsweise als Zweikomponentensystem vorgehalten werden, sind beispielsweise aus DE 10 2009 016 862 bekannt, oder aus DE 20 2011 005 121 oder aus US 2002/0098462 A1.

Die bekannten Misch- und/oder Applikationsvorrichtungen werden dazu verwendet, Dentalpräparate in Form von Zweikomponentensystemen zu lagern und im Anwendungsfall durch Zusammenführen der Komponenten das Dentalpräparat herzustellen. Ihr Einsatz hat sich in der Praxis bewährt. Es besteht allerdings der Wunsch, zur Lagerung der mehrkomponentigen Dentalpräparate einen möglichst geringen apparativen Aufwand betreiben zu müssen. Ferner soll insbesondere eine Verbesserung der Lagerstabilität der Dentalpräparate ermöglicht werden.

Der Erfindung lag somit die Aufgabe zugrunde, eine Lagerung von mehrkomponentigen Dentalpräparaten bei möglichst geringem apparativem Aufwand zu erreichen, und insbesondere eine Verbesserung der Lagerstabilität des Dentalmaterials zu ermöglichen.

Die Erfindung löst die ihr zugrundeliegende Aufgabe bei einer Lager- und Mischvorrichtung der eingangs bezeichneten Art, indem in der einzelnen Kammer bzw. in einer ersten der zwei oder mehr Kammern eine erste und eine zweite Mischkomponente sowie gegebenenfalls eine oder mehrere weitere Mischkomponenten aufgenommen sind. Die Erfindung beruht mit anderen Worten auf dem Ansatz, dass in einer Lager- und Mischvorrichtung eine erste Anzahl von (x) Mischkomponenten gelagert wird, wobei hierfür lediglich eine zweite Anzahl von (x - 1) oder weniger Kammern erforderlich ist. Dies hat zur Folge, dass es möglich wird, durch Aufteilen des Dentalpräparats in eine höhere Anzahl Komponenten die Lagerstabilität zu verbessern, und gleichzeitig den konstruktiven Aufbau der Lager- und Mischvorrichtung einfach zu halten. Im Rahmen der Erfindung wird unter dem Begriff der Lager- und Mischvorrichtung stets eine Vorrichtung verstanden, die sowohl zum Zusammenführen der Mischkomponenten als auch zum Lagern der Mischkomponenten in ihrem nicht ausreagierten Lagerzustand eingerichtet ist. Der Erfindungsgegenstand wird mithin in Abgrenzung zu reinen Mischern, die ausschließlich zum Vermischen durch sie hindurchgeförderter Mischkomponenten geeignet sind, als kombinierte Lager- und Mischvorrichtung verstanden.

Erfindungsgemäß weist die Lager- und Mischvorrichtung einen Aktuator auf, der von einer Lagerstellung zum Einhalten des Lagerzustands der Lager- und Mischvorrichtung in eine Reaktionsstellung zum Zusammenführen der Mischkomponenten bewegbar ist, wobei die erste und eine zweite Mischkomponente sowie gegebenenfalls die eine oder mehrere weitere Mischkomponenten bereits in der einzelnen Kammer bzw. in der ersten Kammer der zwei oder mehr Kammern aufgenommen sind, wenn sich der Aktuator noch in der Lagerstellung befindet.

Unter einem Aktuator wird im Rahmen der Erfindung ein Antrieb verstanden, der dazu eingerichtet ist, eine von außen auf ihn wirkende Antriebsenergie in Bewegungsarbeit umzuwandeln. Der erfindungsgemäße Aktuator ist dazu eingerichtet, aufgrund seiner Bewegung die in der Anzahl von Kammern angeordneten Mischkomponenten zu verdrängen.

Als Mischkomponenten werden diejenigen Stoffe oder Stoffgemische verstanden, die als Startmaterial zur Umsetzung mit jeweils einem oder mehreren weiteren Stoffen bzw. Stoffgemischen zur Herstellung eines Dentalpräparats vorgesehen sind.

Vorzugsweise ist der Aktuator zusätzlich zu den vorgenannten Funktionen auch zum Austreiben des nach der Zusammenführung entstehenden Dentalpräparats eingerichtet. Die Mischkomponenten liegen in den Kammern als Flüssigkeiten, Festkörper, insbesondere Pulver, oder vorzugsweise als pastöse Massen vor, wobei unter einer pastösen Masse eine Suspension aus flüssigen und festen Bestandteilen verstanden wird.

Unter im Lagerzustand voneinander getrennten Kammern wird jegliche Anordnung von Kammern verstanden, bei denen es unabhängig von der Ausrichtung der Kammern zueinander nicht zu einer Kommunikation der Kammerinhalte kommen kann. Mit anderen Worten kann weder Paste noch Flüssigkeit von einer in die andere Kammer strömen, solange sie getrennt sind.

Erfindungsgemäß sind die erste und zweite Mischkomponente in der ersten Kammer in der Lagerstellung des Aktuators voneinander getrennt angeordnet. Durch die Trennung der ersten und zweiten Mischkomponente wird es ermöglicht, auch solche Mischkomponenten miteinander gemeinsam in einer Kammer zu lagern, die bei Kontakt miteinander eine Reaktion eingehen würden.

Vorzugsweise werden die erste und zweite Mischkomponente in der Lagerstellung des Aktuators räumlich voneinander getrennt angeordnet, insbesondere an voneinander beabstandeten Abschnitten der Kammerwand haftend.

Die rheologischen Eigenschaften der ersten und zweiten Mischkomponente werden vorzugsweise in Vorversuchen ermittelt, wobei insbesondere die Viskosität und Fließgrenze der ersten und zweiten Mischkomponente derart gewählt werden sollten, dass die Mischkomponenten nach einem Auftrag auf den jeweiligen Abschnitt der Kammerwand dort haften bleiben und sowohl in einer Ausrichtung der korrespondierenden Abschnitte der Kammerwand parallel zum Schwerefeld der Erde nicht an der Kammerwand abgleiten, als auch bei einer vertikalen Ausrichtung zum Schwerefeld der Erde, also an der Kammerwand frei hängend, sich nicht von der Kammerwand lösen. Vorzugsweise werden die vorstehend genannten Eigenschaften so gewählt und so an die Oberfläche der Kammerwand der Lager- und Mischvorrichtung angepasst, dass vordefinierte Beschleunigungen und Verzögerungen nicht zu einem Ablösen der Mischkomponenten von der Kammerwand führen.

Beispielsweise lässt sich das Haftverhalten der Mischkomponenten durch Aufbringen und langsames Rotieren der Lager- und Mischvorrichtung um drei zueinander senkrechte Achsen testen. Vorzugsweise kann in bestimmten vorgegebenen Orientierungen der Mischkomponenten, insbesondere frei unter dem ihnen zugeordneten Haftabschnitt hängend und/oder senkrecht ausgerichtetem Haftabschnitt, die Bewegung der Lager- und Mischvorrichtung gestoppt und für eine vordefinierte Verweilzeit aufrechterhalten werden. Ein Beschleunigungstest kann beispielsweise durchgeführt werden, indem die befüllte Lager- und Mischvorrichtung aus einer vordefinierten Höhe, beispielsweise etwa im Bereich von 0,25 bis 0,5 m auf eine feste Unterlage fallen gelassen wird. Diese Falltests können optional auch mehrere Male wiederholt werden.

Die erste und/oder zweite Mischkomponente ist vorzugsweise als Paste ausgebildet. Vorzugsweise weist die erste und/oder zweite Mischkomponente ihre Nachgebegrenze bei einer Schubspannung von 1 Pa oder mehr auf, besonders bevorzugt von 5 Pa oder mehr. Weiter vorzugsweise weist die erste und/oder zweite Mischkomponente ihre Fließgrenze bei einer Schubspannung von 50 Pa oder mehr auf. Unter der Nachgebegrenze wird hierbei jene auf die Mischkomponente wirkende Schubspannung verstanden, unterhalb derer sich die Paste reversibel-viskoelastisch verhält. Unter der Fließgrenze wird hierbei diejenige Grenze verstanden, oberhalb derer die innere Struktur der Mischkomponente soweit zusammengebrochen ist, dass sie unter der Schubspannung zu fließen anfängt. Nachgebe- und Fließgrenze sind vorzugsweise mittels eines Amplituden-Sweeps mit einem Rheometer wie etwa einem Typ MCR301 von Anton Paar bestimmt.

In einer weiteren bevorzugten Ausführungsform sind die erste und zweite Mischkomponente als chemisch miteinander reagierende Mischkomponenten ausgewählt, deren Reaktionsprodukt einen verminderten Diffusionskoeffizienten für die erste und zweite Mischkomponente aufweist. Dies hat zur Folge, dass sich bei Kontakt zwischen den beiden Mischkomponenten eine Grenzfläche ausbildet, entlang derer eine chemische Reaktion stattfindet. Durch die Reaktion selbst wird allerdings eine Passivschicht geschaffen, die sich entlang der gesamten Grenzfläche erstreckt und eine Diffusion der Mischkomponenten jeweils hindurch zur anderen Seite erschwert bzw. im besten Fall vollständig verhindert. Hierdurch wird es möglich, die Mischkomponenten direkt aneinandergrenzend in derselben Kammer anzuordnen, da sie automatisch eine Trennung mittels Passivierung herbeiführen.

In denjenigen Ausführungsformen, bei denen eine räumliche Trennung aufgrund der Zusammensetzung der Mischkomponenten wie vorstehend beschrieben nicht erforderlich ist, wird es bevorzugt, die erste und zweite Mischkomponente in der Lagerstellung des Aktuators unmittelbar aneinandergrenzend in der ersten Kammer anzuordnen.

Zusätzlich zu der ersten Kammer, welche die erste und zweite Mischkomponente beherbergt, weist die Lager- und Mischvorrichtung vorzugsweise ferner eine zweite Kammer auf, wobei in der zweiten Kammer eine dritte Mischkomponenten aufgenommen ist, wenn sich der Aktuator noch in der Lagerstellung befindet.

In einer ersten bevorzugten Alternative ist der Aktuator dazu eingerichtet, mittels seiner Bewegung von Lagerstellung in die Reaktionsstellung die dritte Mischkomponente aus der zweiten Kammer heraus in die erste Kammer zu verdrängen, oder alternativ die erste und zweite Mischkomponente aus der ersten Kammer heraus in die zweite Kammer zu verdrängen. Auf diese Weise werden in einer der beiden Kammern alle drei Komponenten zusammengeführt, um in einer chemischen Reaktion die Herstellung des Dentalpräparats zu bewirken. Ggf. kann das Ausführen einer Schüttelbewegung, und/oder einer Rotations- und/oder Schwenkbewegung, und/oder das Zu- oder Abführen von Wärmeenergie von extern unterstützend angewendet werden.

In einer solchen vorstehend beschriebenen Konfiguration ist die Lager- und Mischvorrichtung vorzugsweise als Misch- und/oder Applikationskapsel ausgebildet.

Vorzugsweise ist hierbei der Aktuator als Kolben ausgestaltet, und weist eine erste Rastposition in der Lagerstellung sowie eine zweite Rastposition in der Reaktionsstellung auf. Hierdurch wird es für den Bediener mittels eines haptischen Feedbacks leichter, den Kolben in die Reaktionsstellung zu bringen, ohne versehentlich den Kolben aus seiner Rastposition der Lagerstellung heraus zu bewegen, wenn die Lager- und Mischvorrichtung noch nicht zur Anwendung vorgesehen ist.

Weiter vorzugsweise ist der Aktuator von der Reaktionsstellung aus in eine dritte Stellung zum Ausbringen der zusammengeführten Komponenten bewegbar. Dies ist insbesondere dann bevorzugt, wenn die Lager- und Mischvorrichtung als Misch- und Applikationskapsel eingesetzt werden soll.

In einer zweiten bevorzugten Alternative weist die erste Kammer eine erste Austrittsöffnung auf, und die zweite Kammer weist eine zweite Austrittsöffnung auf, wobei der Aktuator dazu eingerichtet ist, bei einer Bewegung von der Lagerstellung in die Reaktionsstellung die erste und zweite Mischkomponente durch die erste Austrittsöffnung hindurch zu befördern und die dritte Mischkomponente durch die zweite Austrittsöffnung zu befördern.

Bevorzugt weist die Lager- und Mischvorrichtung bei einer solchen Ausgestaltung eine Spritzenkartusche auf, innerhalb welcher die erste und zweite Kammer angeordnet sind, wobei der Aktuator als Mehrfachkolben ausgebildet ist, der für jede der Kammern der Spritzenkartusche einen Kolbenkörper aufweist. Eine Lager- und Mischvorrichtung gemäß diesem Ausführungsbeispiel kann eine Doppelkartusche aufweisen, oder eine Kartusche mit mehr als zwei Kammern, da die Erfindung allgemein auch Lager- und Mischvorrichtungen für Systeme aus vier oder mehr Komponenten betrifft.

Die Spritzenkartusche ist vorzugsweise fluidleitend mit einer Mischkammer, vorzugsweise mit einer Mischkammer eines statischen Mischers verbindbar. Der statische Mischer ist in einer bevorzugten Weiterbildung ferner Bestandteil der erfindungsgemäßen Lager- und Mischvorrichtung, so dass die Spritzenkartusche dann mit dem statischen Mischer verbunden ist.

In einer weiteren bevorzugten Ausführungsform der Erfindung sind in der ersten Mischkammer zusätzlich bereits eine oder mehrere weitere Mischkomponenten angeordnet, wenn sich der Aktuator noch in der Lagerstellung befindet. Auch die Anordnung der Mischkomponenten ist vorzugsweise analog zu den Merkmalen bezüglich der ersten und zweiten Mischkomponenten aus den vorstehend beschriebenen Ausführungsbeispielen weitergebildet. Sofern die Mischkammer ausreichend bemessen ist, sind vorzugsweise auch die eine oder mehreren weiteren Mischkomponenten wahlweise voneinander getrennt angeordnet, oder unmittelbar an jeweils eine oder mehrere der weiteren Mischkomponenten angrenzend angeordnet. Insoweit wird zur Vermeidung von Wiederholungen auf die obigen Ausführungen verwiesen.

In einer weiteren bevorzugten Ausführungsform der Erfindung weist die Lager- und Mischvorrichtung zusätzlich zu der ersten Kammer noch eine oder mehrere weitere Kammern auf, in denen jeweils zwei oder mehr Mischkomponenten bereits angeordnet sind, wenn sich der Aktuator noch in der Lagerstellung befindet. Auch die eine oder mehreren weiteren Kammern sind vorzugsweise gemäß den Merkmalen bezüglich der ersten Kammer und/oder der zweiten Kammer aus den vorstehend beschriebenen bevorzugten Ausführungsformen weitergebildet. Insoweit wird zur Vermeidung von Wiederholungen auf die obigen Ausführungen verwiesen.

Die Erfindung betrifft in einem zweiten Aspekt auch ein Verfahren zur Herstellung einer Lager- und Mischvorrichtung für die Herstellung eines Dentalpräparates aus zwei, drei oder mehr Mischkomponenten.

Der Erfindung liegt in dem zweiten Aspekt die Aufgabe zugrunde, ausgehend von einer Lager- und Mischvorrichtung der eingangs bezeichneten Art, ein Verfahren zu deren Herstellung anzugeben, mit dem eine Verbesserung der Lagerstabilität des Dentalmaterials mit möglichst einfachen Mitteln zu erzielen ist.

Die Erfindung löst die ihr zugrundeliegende Aufgabe, indem das Verfahren die Schritte umfasst:
- Einfüllen einer ersten Mischkomponente in eine erste Kammer der Lager- und Mischvorrichtung, und
- Einfüllen einer zweiten Mischkomponente in die erste Kammer.
Das Verfahren macht sich die gleichen Vorteile und Ansätze zunutze wie die Erfindung gemäß dem ersten Aspekt, und weist die gleichen bevorzugten Ausführungsformen auf. Insoweit wird auf die obigen Ausführungen zum ersten Aspekt verwiesen.

Das Verfahren umfasst vorzugsweise ferner den Schritt:
- Einsetzen eines Aktuators, der von einer Lagerstellung zum Einhalten des Lagerzustandes der Lager- und Mischvorrichtung in eine Reaktionsstellung zum Zusammenführen der Mischkomponenten bewegbar ist, in Lagerstellung in die Lager- und Mischvorrichtung.

Das Verfahren wird ferner vorzugsweise dadurch weitergebildet, dass die erste und zweite Mischkomponente in der ersten Kammer voneinander getrennt angeordnet werden, vorzugsweise räumlich voneinander getrennt, besonderes bevorzugt an voneinander beabstandeten Abschnitten der Kammerwand haftend.

In einer weiteren bevorzugten Ausführungsform werden die erste und zweite Mischkomponente unmittelbar aneinandergrenzend in der ersten Kammer angeordnet.

Vorzugsweise werden die erste und zweite Mischkomponente als chemisch miteinander reagierende Mischkomponenten ausgewählt, deren Reaktionsprodukt einen verminderten Diffusionskoeffizienten für die erste und zweite Mischkomponente aufweist.

Vorzugsweise umfasst das Verfahren ferner den Schritt:
- Einfüllen einer dritten Mischkomponente in eine zweite Kammer der Lager- und Mischvorrichtung, wobei die zweite Kammer in der Lagerstellung des Aktuators von der ersten Kammer getrennt ist.

In einem dritten Aspekt betrifft die Erfindung auch die Verwendung einer Lager- und Mischvorrichtung zur Herstellung eines Dentalpräparats aus einer ersten Anzahl Mischkomponenten.

Die bereits mit Bezug auf die ersten beiden Aspekte genannten Aufgaben löst die Erfindung, indem die Lager- und Mischvorrichtung eine zweite Anzahl von in einem Lagerzustand voneinander getrennten, die Mischkomponenten enthaltenden Kammern und vorzugsweise einen Aktuator aufweist, der von einer Lagerstellung zum Einhalten des Lagerzustands der Lager- und Mischvorrichtung in eine Reaktionsstellung zum Zusammenführen der Mischkomponenten bewegbar ist, wobei die zweite Anzahl mindestens um eins kleiner ist als die erste Anzahl. Insbesondere ist die Lager- und Mischvorrichtung nach einer der vorstehend beschriebenen bevorzugten Ausführungsformen ausgebildet, und vorzugsweise mittels des Verfahrens nach einer der vorstehend beschriebenen bevorzugten Ausführungsformen herstellbar.

Die Erfindung wird nachfolgend anhand bevorzugter Ausführungsbeispiele und unter Bezugnahme auf die beigefügten Figuren näher erläutert. Hierbei zeigen:
- Figuren 1a-c: eine Lager- und Mischvorrichtung gemäß einem ersten Ausführungsbeispiel in unterschiedlichen Betriebszuständen,
- Figuren 2a,b: eine Lager- und Mischvorrichtung gemäß einem zweiten Ausführungsbeispiel in verschiedenen Betriebszuständen, und
- Figur 3: eine grafische Darstellung des Formänderungsverhaltens verschiedener Mischkomponenten.

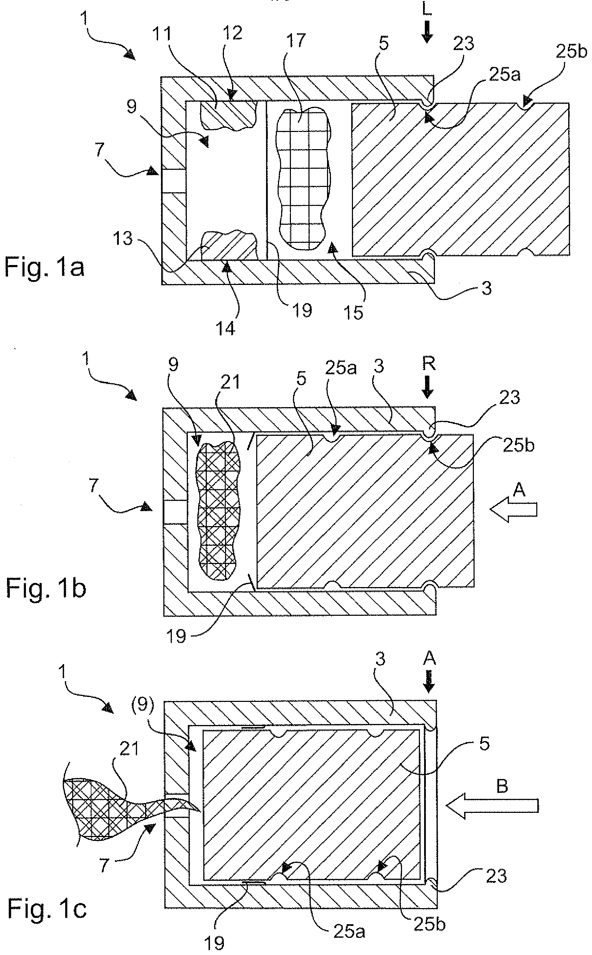

Die in den Figuren 1a-c gezeigte Lager- und Mischvorrichtung 1 ist als Mischkapsel ausgestaltet. Sie weist einen Kapselkörper 3 auf, in dem ein als Kolben ausgebildeter Aktuator 5 linear beweglich geführt ist. Die Lager- und Mischvorrichtung 1 weist eine Austrittsöffnung 7 auf, durch welche in geöffnetem Zustand das Produkt der Umsetzung der Mischkomponenten aus einer ersten Kammer 9 austreten kann. In der ersten Kammer 9 sind eine erste Mischkomponente 11 und eine zweite Mischkomponente 13 angeordnet. Die erste Mischkomponente 11 und die zweite Mischkomponente 13 sind räumlich voneinander getrennt. Die erste Mischkomponente 11 haftet an einem ersten Abschnitt 12 einer Wand der ersten Kammer 9, während die zweite Mischkomponente 13 an einem von dem ersten Abschnitt 12 beabstandeten zweiten Abschnitt 14 einer Wand der ersten Kammer 9 haftet.

Die Lager- und Mischvorrichtung 1 weist ferner eine zweite Kammer 15 auf, die von der ersten Kammer 9 getrennt ist, beispielsweise durch ein Trennmittel 19, welches beispielsweise als Folie ausgebildet sein kann. In der zweiten Kammer 15 ist eine dritte Mischkomponente 17 angeordnet.

Der Aktuator 5 weist ein erstes Rastmittel 25a auf, welches beispielsweise als umlaufende Ausnehmung ausgebildet sein kann. Der Kapselkörper 3 weist ein korrespondierend ausgebildetes Rastmittel 23 auf, welches beispielsweise als umlaufender Vorsprung ausgebildet sein kann. Die korrespondierenden Rastmittel 23, 25a wirken derart zusammen, dass sie in der in Figur 1a abgebildeten Lagerstellung L miteinander in Wirkverbindung stehen und beim Aufheben der Wirkverbindung ein haptisches Feedback an den Bediener geben. Gezeigt ist im Ausführungsbeispiel der Figuren 1a-c ein formschlüssiges Eingreifen der Rastmittel 23, 25a ineinander. Alternativ wäre auch ein kraftschlüssiges bzw. reibschlüssiges Angreifen denkbar. Die von den korrespondierend ausgebildeten Rastmitteln 23, 25a ausgeübte Rastkraft verhindert, dass ein Bediener unbeabsichtigt den Aktuator 5 aus der Lagerstellung L heraus bewegt.

Der Aktuator 5 weist ferner ein zweites Rastmittel 25b auf, welches beispielsweise als umlaufende Ausnehmung ausgebildet sein kann. In der in Figur 1b gezeigten Reaktionsstellung R befinden sich die korrespondierend ausgebildeten Rastmittel 23, 25b des Kapselkörpers 3 bzw. des Aktuators 5 miteinander in Wirkverbindung, vorzugsweise mit gleichem Effekt wie die Rastmittel 23 und 25a in Figur 1a.

In Figur 1c ist der Aktuator 5 in einer Ausbringstellung A gezeigt. Die Ausbringstellung A kann wahlweise dadurch erreicht werden, dass der Aktuator 5 vollständig gegen den die Austrittsöffnung 7 aufweisenden Wandabschnitt zur Anlage gebracht wird, oder durch weitere, nicht dargestellte, Rastmittel in der gezeigten Position gehalten wird je nach Ausgestaltung der Lager- und Mischvorrichtung. Ziel sollte es allgemein sein, so viel Material wie möglich aus dem verbleibenden Teil der ersten Kammer 9 der Lager- und Mischvorrichtung 1 auszubringen.

Wie sich aus den Figuren 1b und 1c im Vergleich zu Figur 1a ergibt, ist der Aktuator 5 dazu eingerichtet, die dritte Mischkomponente 17 aus der zweiten Kammer 15 zu verdrängen und in die erste Kammer 9 zu überführen, beispielsweise durch Überwinden des Trennmittels 19, insbesondere durch dessen Zerstörung, wenn das Trennmittel 19 beispielsweise als Folie ausgebildet ist.

In der in Figur 1b gezeigten Stellung, in welcher der Aktuator 5 in Richtung des Pfeils A in seine Reaktionsstellung gebracht worden ist, ist durch chemische Reaktion der drei Komponenten 11, 13 und 17 ein Dentalpräparat 21 hergestellt worden, welches nun aus der ersten Kammer 9 durch die Austrittsöffnung 7 hindurch ausgebracht werden kann.

In Figur 1c ist dieser Ausbringvorgang dargestellt. Der Aktuator 5 ist in Richtung des Pfeils B ausgehend von der Reaktionsstellung in Figur 1b weiterbewegt worden, und das Dentalpräparat 21 ist aus der ersten Kammer 9 heraus befördert worden. Optional kann mit der Austrittsöffnung 7 eine Applikationskanüle (nicht dargestellt) fluidleitend verbunden werden, mittels welcher das Dentalpräparat direkt appliziert werden kann.

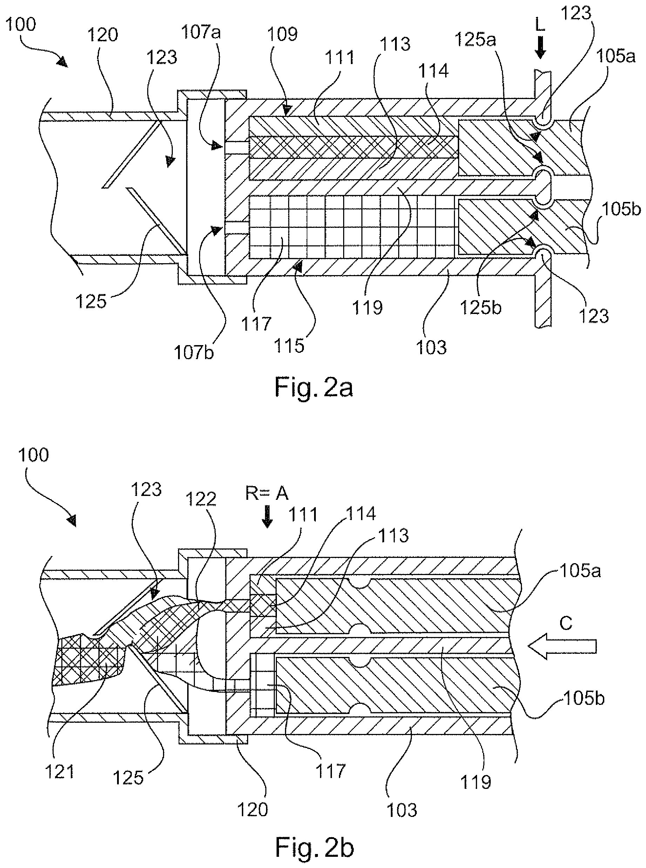

Während im ersten Ausführungsbeispiel die Lager- und Mischvorrichtung 1 als Mischkapsel dargestellt worden ist, zeigen die Figuren 2a,b eine weitere Verkörperung des erfindungsgemäßen Konzepts. Die Lager- und Mischvorrichtung 100 des zweiten Ausführungsbeispiels weist eine Spritzenkartusche 103 auf. Die Spritzenkartusche 103 weist eine erste Kammer 109 und eine zweite Kammer 115 auf. In der ersten Kammer 109 ist ein Kolbenkörper 105a linear beweglich geführt, während in der zweiten Kammer 115 ein zweiter Kolbenkörper 105b linear beweglich geführt ist. Vorzugsweise sind der Kolbenkörper 105a und 105b miteinander derart gekoppelt, dass sie synchron bewegbar sind, um die Inhalte beider Kammern 109, 115 simultan bei Betätigung zu entleeren.

In der ersten Kammer 109 sind eine erste Mischkomponente 111 und eine zweite Mischkomponente 113 angeordnet. Zwischen den beiden Mischkomponenten 111, 113 ist eine Grenzfläche ausgebildet. Handelt es sich bei den beiden Mischkomponenten 111, 113 um miteinander chemisch reaktive Substanzen gemäß einer der vorstehend beschriebenen bevorzugten Ausführungsformen, deren Reaktionsprodukt einen verminderten Diffusionskoeffizient bezüglich der jeweiligen Mischkomponenten 111, 113 aufweist, bildet sich eine Passivschicht 114 aus.

In der zweiten Kammer 115 ist eine dritte Mischkomponente 117 angeordnet.

Die erste Kammer 109 weist eine erste Austrittsöffnung 107a auf. Die zweite Kammer 115 weist eine zweite Austrittsöffnung 107b auf. Die Austrittsöffnungen 107a, 107b sind in geöffnetem Zustand fluidleitend mit einer dritten Kammer, nämlich der Mischkammer 123 eines statischen Mischers 120 verbunden. In der Mischkammer 123 des statischen Mischers 120 sind ferner mehrere Mischelemente 125 zum Mischen der in den Kammern 109, 115 vorgehaltenen Mischkomponenten 111, 113, 117 angeordnet.

Die erste und zweite Kammer 109, 115 sind mittels einer Trennwand 119 voneinander permanent getrennt.

Die Lager- und Mischvorrichtung 100 weist ein Rastmittel 123 auf, welches in der in Figur 2a gezeigten Stellung mit korrespondierenden Rastmitteln 125a,b des Aktuators 105a,b in Wirkverbindung steht. Bezüglich der Funktionsweise der korrespondierenden Rastmittel 123, 125a, b wird auf die Ausführungen zu den korrespondierenden Rastmitteln 23, 25a, b der Figuren 1a-c verwiesen.

Im Unterschied zu dem Ausführungsbeispiel aus den Figuren 1a-c wird bei einer Betätigung eines Aktuators 105a,b nicht der Inhalt einer der beiden Kammern 109; 115 in die jeweils andere Kammer 109; 115 überführt, sondern es werden simultan die Inhalte beider Kammern 109, 115 in eine dritte Kammer, nämlich die Mischkammer 123 überführt, und dort mittels der Mischelemente 125 zu einem Dentalpräparat 121 vermischt. Bei einer Bewegung des Aktuators 105a,b, angedeutet durch den Pfeil C, kommt es in der Mischkammer 123 nicht nur zu einer Vermischung der Komponenten 111, 113, 117 selbst, sondern es wird zusätzlich eine etwaig in der ersten Kammer 109 zwischenzeitlich gebildete Passivschicht mit untergemischt, angedeutet durch Bezugszeichen 122. Bei geeignet gewählten Mischkomponenten 111, 113 in der ersten Kammer 109 wird es durch den statischen Mischer 120 sogar ermöglicht, die sich gegebenenfalls an der Grenzfläche bildende Passivschicht 114 so weit unterzumischen, dass sie gemeinsam mit der dritten Mischkomponente 117 ausreagiert, oder zumindest nach dem Durchlaufen der Mischkammer 123 nicht mehr sichtbar im aus dem statischen Mischer 120 ausgetragenen Dentalpräparat 121 ist.

Wie sich aus den vorstehenden Ausführungen insbesondere im Vergleich der in den Figuren beschriebenen Ausführungsbeispiele zeigt, machen sich trotz der unterschiedlichen konstruktiven Ausgestaltung beide Ausführungsbeispiele die gleiche Erkenntnis zunutze, dass nämlich eine Unterbringung von mehr als einer Komponente in zumindest einer der Kammern der Lager- und Mischvorrichtung unerwartete Vorteile bezüglich der Lagerstabilität bringt, ohne den konstruktiven Aufbau der Lager- und Mischvorrichtung selbst komplizierter gestalten zu müssen.

Anhand der folgenden zwei Beispiele wird die Erfindung bzgl. ihrer physikalisch/chemischen Aspekte weiter erläutert.

Nachfolgend ist die Zusammensetzung der getesteten Mehrkomponentensysteme aufgeführt. Die Abkürzungen bedeuten:
- UDMA: Urethandimethacrylsäureester (1,6-Bis[2-methacryloyloxyethoxycarbonyl-amino]-2,4,4-trimethylhexan)
- GDMA: Glyzerindimethacrylat
- HPMA: Hydroxypropylmethacrylat
- Bis-GMA: 2,2-Bis[4-(2-hydroxy-3-methacryloyloxypropoxy)phenyl]propan
- EBADMA: ethoxyliertes Bisphenol-A-dimethacrylat
- TEDMA: Triethylenglycoldimethacrylat
- HP-Phosphat: Phosphorsäureester von Hydroxypropylmethacrylat
- BPO: Benzoylperoxid
- Bis-HEPToluidin: N,N-Bis(hydroxyethyl)paratoluidin (N,N-Dihydroxyethyl-p-toluidin)
- NaTS: Natriumtoluolsulfinat
- CQ: Campherchinon
- DABE: N,N-Dimethylaminobenzoesäureethylester
- BHT: Butylhydroxytoluol, und
- Aerosil: pyrogene Kieselsäure.

In der folgenden Tabelle 1 ist in der Zeile "Verhältnis" der Massenanteil der jeweiligen Mischkomponente (Paste) im Verhältnis zu den Massenanteilen der weiteren Mischkomponente an der durch Zusammenführen der Mischkomponenten erhältlichen Mischung angegeben. In den auf die Zeile "Verhältnis" folgenden Zeilen der Tabelle sind die prozentualen Anteile der einzelnen Mischungsbestandteile an der jeweiligen Mischkomponente (Spalten "Kat-Paste", "Basis-Paste") bzw. der gebildeten Mischung (Spalte "Mischung") angegeben, bezogen auf die Gesamtmasse der jeweiligen Mischkomponente bzw. der gebildeten Mischung.

### Beispiel 1:

Das Mehrkomponentensystem des ersten Beispiels ist ein Befestigungskomposit. Die Zusammensetzung der Mischkomponenten dieses Befestigungskomposits und der durch Zusammenführen der Mischkomponenten im angegebenen Massenverhältnis erhältlichen Mischung sind in der folgenden Tabelle angegeben.

Das Befestigungskomposit des Beispiels ist ein Zweikomponentensystem, dessen erste Mischkomponente (Kat-Paste) und zweite Mischkomponente (Basis-Paste) in einer einzelnen Kammer angeordnet sein können, oder in einer ersten Kammer von mehreren Kammern. Im letztgenannten Fall kann beispielsweise in einer zweiten Kammer ein Farbstoff als dritte Mischkomponente angeordnet sein.

Das verwendete Dentalglas 1 ist ein säureinertes Glas mit einer durchschnittlichen Teilchengröße von 0,7 µm. Das Dentalglas 2 ist ein Barium-Bor-Aluminiumsilikatglas mit einer durchschnittlichen Teilchengröße von 3,5 µm. Die Teilchengrößenbestimmung der Partikel wird vorzugsweise mittels Lichtstreuung (Laserbeugung) beispielsweise mit einem Partikelgrößenmessgerät Beckmann Coulter LS 13320 bestimmt.

Aerosil 1 ist eine eher thixotropierend wirkende Kieselsäure wie R 812S und Aerosil 2 ist eine eher verdickend wirkende Kieselsäure wie R 709.

**Tabelle 1:**

| | Kammer 1 | Kammer 1 | |
|---|---|---|---|
| | Kat-Paste | Basis-Paste | Mischung |
| Verhältnis | 1 | 1 | |
| UDMA | 3,74 | 8,21 | 5,97 |
| GDMA | 6,58 | 10,05 | 8,32 |
| HPMA | 3,88 | 4,13 | 4,01 |
| Bis-GMA | 6,51 | 5,49 | 6,00 |
| EBADMA | 0,99 | 2,17 | 1,58 |
| TEDMA | 0,94 | 2,07 | 1,51 |
| HP-Phosphat | 10,00 | 0,00 | 5,00 |
| Aerosil 1 | 5,00 | 5,00 | 5,00 |
| Aerosil 2 | 3,50 | 3,00 | 3,25 |
| Dentalglas 1 | 46,18 | 46,18 | 46,18 |
| Dentalglas 2 | 11,16 | 11,66 | 11,41 |
| BPO | 1,45 | 0,00 | 0,73 |
| Bis-HEPToluidin | 0,00 | 1,00 | 0,50 |
| NaTS | 0,00 | 0,75 | 0,38 |
| CQ | 0,00 | 0,09 | 0,05 |
| DABE | 0,00 | 0,14 | 0,07 |
| BHT | 0,06 | 0,06 | 0,06 |
| | 100,00 | 100,00 | 100,00 |

### Beispiel 2 und Vergleichsbeispiel

Die Mehrkomponentensysteme von Beispiel 2 und dem Vergleichsbeispiel sind Befestigungskomposite. Die Zusammensetzung der Mischkomponenten dieser Befestigungskomposite und der jeweils durch Zusammenführen der Mischkomponenten im angegebenen Massenverhältnis erhältlichen Mischung sind in Tabelle 2 aufgeführt. Die durch Zusammenführen der Mischkomponenten des Beispiels 2 bzw. des Vergleichsbeispiels gebildeten Mischungen weisen die gleiche Zusammensetzung auf.

Das Befestigungskomposit des Beispiels 2 ist ein Dreikomponentensystem, dessen erste und zweite Mischkomponente (Paste 1, Paste 2) in der ersten Kammer einer erfindungsgemäßen Lager- und Mischvorrichtung angeordnet sind, und dessen dritte Mischkomponente (Paste 3) in der zweiten Kammer einer erfindungsgemäßen Lager- und Mischvorrichtung aufgenommen ist.

Das Befestigungskomposit des Vergleichsbeispiels ist ein Zweikomponentensystem, dessen erste Mischkomponente (Paste V1) in der ersten Kammer und dessen zweite Mischkomponente (Paste V2) in der zweiten Kammer einer zwei Kammern umfassenden Lager- und Mischvorrichtung aufgenommen sind. Die durch Zusammenführen der Mischkomponenten des Beispiels 2 bzw. des Vergleichsbeispiels gebildeten Mischungen weisen die gleiche Zusammensetzung auf.

In der folgenden Tabelle 2 ist in der Zeile "Verhältnis" der Massenanteil der jeweiligen Mischkomponente (Paste) im Verhältnis zu den Massenanteilen der weiteren Mischkomponenten an der durch Zusammenführen der Mischkomponenten erhältlichen Mischung angegeben. In den auf die Zeile "Verhältnis" folgenden Zeilen der Tabelle 2 sind die prozentualen Anteile der einzelnen Mischungsbestandteile an der jeweiligen Mischkomponente (Spalten "Paste 1", "Paste 2", "Paste 3") bzw. der gebildeten Mischung (Spalte "Mischung") angegeben, bezogen auf die Gesamtmasse der jeweiligen Mischkomponente bzw. der gebildeten Mischung.

**Tabelle 2**

| | Beispiel 2 | | | | Vergleichsbeispiel | | |
|---|---|---|---|---|---|---|---|
| | Kammer 1 | | Kammer 2 | | Kammer 1 | Kammer 2 | |
| | Paste 1 | Paste 2 | Paste 3 | Mischung | Paste V1 | Paste V2 | Mischung |
| Verhältnis | 1 | 1 | 1 | | 1 | 1 | |
| UDMA | 20,00 | 20,00 | 10,00 | 16,67 | 11,80 | 21,54 | 16,67 |
| GDMA | 10,00 | 10,00 | 5,00 | 8,33 | 5,90 | 10,77 | 8,33 |
| HPMA | 5,00 | 5,00 | 5,00 | 5,00 | 3,54 | 6,46 | 5,00 |
| HP-Phosphat | | | 30,00 | 10,00 | 20,00 | | 10,00 |
| BHT | 0,10 | 0,10 | 0,10 | 0,10 | 0,10 | 0,10 | 0,10 |
| Aerosil1 | 5,00 | 5,00 | 2,00 | 4,00 | 4,00 | 4,00 | 4,00 |
| Aerosil2 | 1,50 | 1,50 | 5,00 | 2,67 | 2,67 | 2,67 | 2,67 |
| Dentalglas1 | 18,40 | 18,20 | 39,90 | 25,50 | 51,00 | | 25,50 |
| Dentalglas2 | 38,50 | 38,00 | | 25,50 | | 51,00 | 25,50 |
| BPO | 1,50 | | | 0,50 | 1,00 | | 0,50 |
| Bis-HEPToluidin | | | 2,00 | 0,67 | | 1,33 | 0,67 |
| NaTS | | 1,50 | | 0,50 | | 1,00 | 0,50 |
| CQ | | 0,70 | | 0,23 | | 0,47 | 0,23 |
| DABE | | | 1,00 | 0,33 | | 0,67 | 0,33 |
| Summe | 100,0 | 100,0 | 100,0 | 100,0 | 100,0 | 100,0 | 100,0 |
| | | | | | | | |

| Material | | Abbindezeit bei Lagerung 37°C (Sekunden) | | | | | |
|---|---|---|---|---|---|---|---|
| | | initial | 1 Monat | 2 Monate | | 3 Monate | |
| Beispiel 2 | | 180 | 182 | 183 | | 183 | |
| Verleichsbeispiel | | 176 | 190 | 205 | | 225 | |
| | | | | | | | |

| | | Haftung CC bei Lagerung 37°C in MPa | | | | | |
|---|---|---|---|---|---|---|---|
| Material | | initial | 1 Monat | 2 Monate | | 3 Monate | |
| Beispiel 2 | | 12,4 | 12,2 | 12,0 | | 12,2 | |
| Vergleichsbeispiel | | 12,6 | 9,9 | 8,5 | | 7,3 | |

| | Biegefestigkeit CC bei Lagerung 37°C (MPa) | | | | | | |
|---|---|---|---|---|---|---|---|
| Material | initial | 1 Monat | | 2 Monate | | 3 Monate | |
| Beispiel 2 | 111 | 112 | | 113 | | 110 | |
| Vergleichsbeispiel | 112 | 109 | | 103 | | 90 | |

Der Begriff "CC" bedeutet "chemical curing" und besagt, dass die Zusammensetzung ausschließlich "chemisch" (und nicht auch photochemisch) nach dem Mischen der Komponenten gehärtet wird.

Die Haftung wird gemäß ISO/TS 11405 bestimmt.

Die Biegefestigkeit wird gemäß DIN EN ISO 4049: 2010-03, Abschnitt 7.11.2.1. bestimmt.

Die Abbindezeit wird gemäß der DIN EN ISO 4049: 2010-03, Abschnitt 7.7. bestimmt.

Mit erfindungsgemäßen Lager- und Mischvorrichtungen ist für Dreikomponentensysteme eine vergleichbar hohe Lagerstabilität erreichbar wie mit Lagervorrichtungen, in denen jede Mischkomponente des Dreikomponentensystems in einer einzelnen Kammer gelagert ist und die Komponenten per Hand gemischt würden.

Prinzipiell können mehrkomponentige dentale Zusammensetzungen immer per Hand miteinander gemischt werden. Nachteilig an den Handmischungen im Vergleich zu Mischungen aus Vorrichtungen sind das Risiko eines ungenauen Mischverhältnisses, das Risiko untergemischter Luftblasen, eine längere Mischzeit, eine kürzere Verarbeitungszeit sowie eine insgesamt größere Fehleranfälligkeit.

Mit den erfindungsgemäßen Lager- und Mischvorrichtungen sind somit Verbesserungen der Lagerstabilität sowie den damit einhergehenden Eigenschaften des Dentalmaterials im Vergleich zu den 2-komponentigen Lager- und Mischvorrichtungen aus dem Stand der Technik als auch den Handmischsystemen verknüpft.

Die Mischkomponenten des zweiten Beispiels wurden auch exemplarisch hinsichtlich ihrer rheologischen Eigenschaften untersucht. Zur Bestimmung der Nachgebegrenze und der Fließgrenze der Mischkomponenten wurden diese Mischkomponenten in einem Rheometer des Typs MCR 301 von Anton Paar untersucht. Es wurde das Messsystem PP25 verwendet. Die Messungen wurden bei einer Temperatur von 23°C durchgeführt.

Das Gerät wurde im Oszillationsmodus betrieben, bei dem ein Messkörper eine harmonische Schwingung auf die Mischkomponente als Probe überträgt.

Für die Durchführung des Messverfahrens wird jeweils eine Mischkomponente flächig gleichmäßig zwischen zwei Platten verteilt. Die Mischkomponente wird von einem Messkörper mit der vorbezeichneten harmonischen Schwingung beaufschlagt. Als maximaler Spaltabstand zwischen den beiden Platten wird ein Wert von 1,00 mm vorgegeben. Bei konstanter Kreisfrequenz der harmonischen Schwingung, im vorliegenden Beispiel 10 rad/s wird die Amplitude der Schwingungsbewegung über einen Deformationsbereich von 0,01 bis 100% durchfahren. Die Deformation ist gleich dem Quotienten aus Amplitude und maximalem Spaltenabstand.

Unter Einleitung der vorstehend bezeichneten Parameter werden bei der Messung für jede Mischkomponente zwei Kurven ermittelt. Hierbei ist jeweils eine erste Kurve repräsentativ für den Speichermodul G', und eine zweite Kurve ist repräsentativ für den sogenannten Verlustmodul G". Der Speichermodul kennzeichnet den elastischen Formänderungsanteil der Mischkomponente, während der Verlustmodul den plastischen Formänderungsanteil kennzeichnet.

Bei geringen Deformationen verhält sich die Mischkomponente in einem linearen Bereich reversibel-viskoelastisch. Es gibt keine signifikante Änderung der Probenstruktur infolge der Deformation. Der letzte Messpunkt, bei dem der Speichermodul G' gerade noch nicht vom zuvor noch in etwa linearem Bereich abweicht, wird als Nachgebegrenze bezeichnet. Bei Überschreiten der Nachgebegrenze wird die Mischkomponente zunächst immer noch gelartigen Charakter aufweisen, allerdings irreversibel unter Einfluss der Schubspannung verändert. Der Verlustmodul G" und der Speichermodul G' nähern sich an. Der Schnittpunkt zwischen den Kurven des jeweiligen Verlustmoduls G" und des Speichermoduls G' kennzeichnet die Fließgrenze. Jenseits dieser Fließgrenze ist aufgrund des stark überwiegenden Formänderungsverhaltens der Mischkomponente nicht mehr von einem viskoelastischen Verhalten zu sprechen.

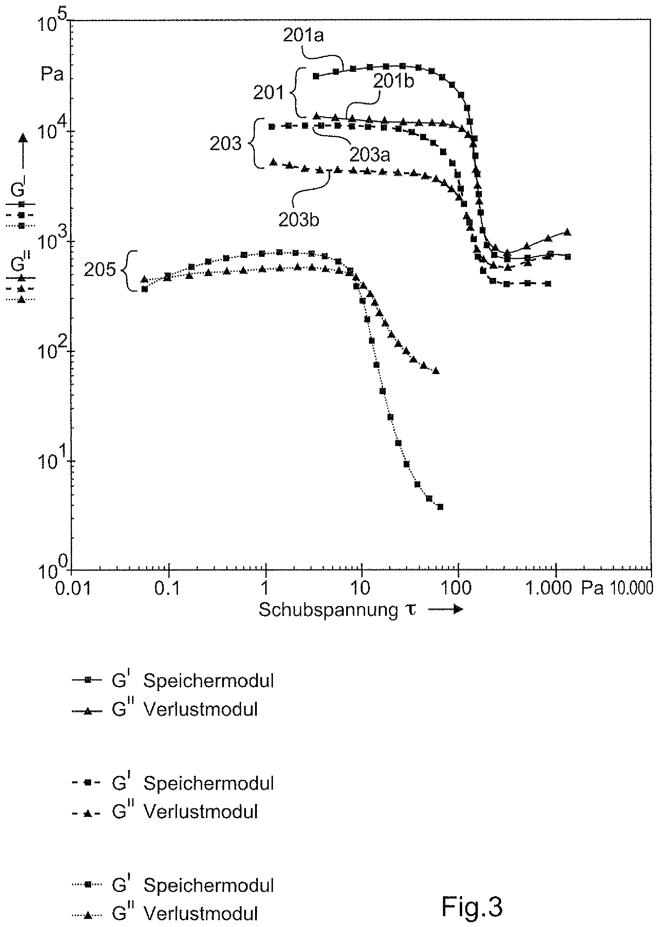

In Figur 3 sind exemplarisch für Beispiel 2 die ermittelten Kenngrößen für die drei Mischkomponenten dargestellt. Hierbei repräsentiert ein erstes Kurvenpaar 201 die erste Mischkomponente (Paste 1). Ein zweites Kurvenpaar 203 repräsentiert die zweite Mischkomponente (Paste 2). Der Vollständigkeit halber ist die in der zweiten Mischkammer zu lagernde dritte Mischkomponente (Paste 3) ebenfalls abgebildet und von einem dritten Kurvenpaar 205 repräsentiert.

Das erste Kurvenpaar hat einen Speichermodul 201a und einen Verlustmodul 201b. Dargestellt sind die Kurven der Kurvenpaare 201, 203, 205 der Übersichtlichkeit halber erst ab Erreichen der Nachgebegrenze, welche für die erste Mischkomponente bei einer Schubspannung von ca. 3,5 Pa liegt. Die Fließgrenze liegt bei einer Schubspannung von 150 Pa.

Die zweite Mischkomponente weist einen Speichermodul 203a und einen Verlustmodul 203b auf. Die Nachgebegrenze für die zweite Mischkomponente liegt bei einer Schubspannung von etwas oberhalb 1 Pa.

Die Fließgrenze liegt für die zweite Mischkomponente etwas unterhalb der Fließgrenze der ersten Mischkomponente, allerdings immer noch bei einer Schubspannung von oberhalb 100 Pa.

Im Vergleich zu der ersten und zweiten Mischkomponente wird deutlich, dass sich die dritte Mischkomponente, gekennzeichnet durch das Kurvenpaar 205, nicht für eine Lagerung in der ersten Kammer eignet. Zum einen ist bei ihr der maximale Abstand zwischen Verlustmodul und Speichermodul vergleichsweise gering, zum anderen ist die Nachgebegrenze bereits bei einer sehr viel geringeren Schubspannung von unterhalb 0,1 Pa erreicht.

Im Gegensatz dazu wird für die Eignung einer Mischkomponente zur Lagerung mit einer anderen Mischkomponente gemeinsam in einer Kammer angestrebt, dass der Speichermodul sich möglichst weit von dem Verlustmodul unterscheidet, jedenfalls bei Erreichen der Nachgebegrenze. Hierdurch wird eine größere mögliche Formänderung bis zum Erreichen der Fließgrenze gewährleistet.

So ist bei der ersten und zweiten Mischkomponente anhand der Kurvenpaare 201, 203 anschaulich nachzuvollziehen, dass bei Erreichen der Nachgebegrenze der Speichermodul deutlich höher ist als der Verlustmodul, und dass dieser Abstand über einen verhältnismäßig breiten Schubspannungsbereich nahezu konstant bleibt bis er schließlich abrupt abnimmt, wenn sich Speichermodul G' und Verlustmodul G" der Fließgrenze annähern.

## Patentansprüche

1. Lager- und Mischvorrichtung, insbesondere Misch- und/oder Applikationskapsel (1, 100), zur Herstellung eines Dentalpräparats (21, 121) aus zwei, drei oder mehr Mischkomponenten (11, 13, 17; 111, 113, 117),
mit einem Aktuator (5, 105a, b), der von einer Lagerstellung zum Einhalten des Lagerzustands der Lager- und Mischvorrichtung in eine Reaktionsstellung zum Zusammenführen der Mischkomponenten (11, 13, 17; 111, 113, 117) bewegbar ist,
wobei die Lager- und Mischvorrichtung
- eine einzelne Kammer oder zwei oder mehr in einem Lagerzustand voneinander getrennte, die Mischkomponenten (11, 13, 17; 111, 113, 117) enthaltende Kammern (9, 15; 109, 115) aufweist,
**dadurch gekennzeichnet, dass** in der einzelnen Kammer bzw. einer ersten Kammer (9, 109) der zwei oder mehr Kammern bereits eine erste und eine zweite Mischkomponente (11, 13; 111, 113) sowie gegebenenfalls eine oder mehrere weitere Mischkomponenten aufgenommen sind, wenn sich der Aktuator (5, 105a,b) noch in der Lagerstellung befindet, wobei die erste und zweite Mischkomponente (11, 13; 111, 113) in der einzelnen bzw. ersten Kammer (9, 109) in der Lagerstellung des Aktuators (5, 105a, b) voneinander getrennt angeordnet sind.

2. Lager- und Mischvorrichtung nach Anspruch 1,
wobei die erste und zweite Mischkomponente (11, 13; 111, 113) in der ersten Kammer (9, 109) in der Lagerstellung des Aktuators (5, 105a, b),
räumlich voneinander getrennt angeordnet sind, vorzugsweise an voneinander beabstandeten Abschnitten (12, 14) der Kammerwand haftend.

3. Lager- und Mischvorrichtung (1, 100) nach einem der vorstehenden Ansprüche,
**dadurch gekennzeichnet, dass** die erste und zweite Mischkomponente (11, 13, 111, 113) als chemisch miteinander reagierende Mischkomponenten ausgewählt sind, deren Reaktionsprodukt einen verminderten Diffusionskoeffizienten für die erste und zweite Mischkomponente (11, 13; 111, 113) aufweist.

4. Lager- und Mischvorrichtung (100) nach Anspruch 3,
**dadurch gekennzeichnet, dass** die erste und zweite Mischkomponente (111, 113) in der Lagerstellung des Aktuators (105a, b) unmittelbar aneinandergrenzend in der ersten Kammer (109) angeordnet sind.

5. Lager- und Mischvorrichtung (1, 100) nach einem der vorstehenden Ansprüche,
**dadurch gekennzeichnet, dass** in einer zweiten Kammer (15, 115), die in der Lagerstellung des Aktuators von der ersten Kammer getrennt ist, eine dritte Mischkomponente (17, 117) aufgenommen ist, wenn sich der Aktuator (5, 105a, b) noch in der Lagerstellung befindet.

6. Lager- und Mischvorrichtung (1) nach Anspruch 5,
**dadurch gekennzeichnet, dass** der Aktuator (5) dazu eingerichtet ist, mittels seiner Bewegung von der Lagerstellung in die Reaktionsstellung
die dritte Mischkomponente (17) aus der zweiten Kammer (15) heraus in die erste Kammer (9) zu verdrängen, oder
die erste und zweite Mischkomponente aus der ersten Kammer heraus in die zweite Kammer zu verdrängen.

7. Lager- und Mischvorrichtung (1) nach Anspruch 6,
**dadurch gekennzeichnet, dass** der Aktuator (5) als Kolben ausgestaltet ist, und eine erste Rastposition in der Lagerstellung, sowie eine zweite Rastposition in der Reaktionsstellung aufweist, und vorzugsweise von der Reaktionsstellung aus in eine dritte Stellung zum Ausbringen der zusammengeführten Mischkomponenten (11, 13, 17) bewegbar ist.

8. Lager- und Mischvorrichtung (100) nach Anspruch 5,
**dadurch gekennzeichnet, dass** die erste Kammer (109) eine erste Austrittsöffnung (107a) aufweist, und die zweite Kammer (115) eine zweite Austrittsöffnung (107b) aufweist, und dass der Aktuator (105a, b) dazu eingerichtet ist, bei einer Bewegung von der Lagerstellung in die Reaktionsstellung die erste und zweite Mischkomponente (111, 113) durch die erste Austrittsöffnung (107a) hindurch zu befördern, und die dritte Mischkomponente (117) durch die zweite Austrittsöffnung (107b) zu befördern.

9. Lager- und Mischvorrichtung (100) nach Anspruch 8,
**dadurch gekennzeichnet, dass** die Lager- und Mischvorrichtung eine Spritzenkartusche (103) aufweist, innerhalb welcher die erste und zweite Kammer (109, 115) angeordnet sind, wobei der Aktuator (105a, b) als Mehrfachkolben ausgebildet ist, der für jede der Kammern (109, 115) der Spritzenkartusche (103) einen Kolbenkörper aufweist,
wobei vorzugsweise die Spritzenkartusche (103) fluidleitend mit einer Mischkammer (123), vorzugsweise einer Mischkammer eines statischen Mischers (120), verbindbar ist.

10. Lager- und Mischvorrichtung nach einem der vorstehenden Ansprüche,
mit einer oder mehreren weiteren Kammern, in denen jeweils zwei oder mehr Mischkomponenten bereits angeordnet sind, wenn sich der Aktuator noch in der Lagerstellung befindet.

11. Verfahren zur Herstellung einer Lager- und Mischvorrichtung nach einem der Ansprüche 1-10, für die Herstellung eines Dentalpräparates aus zwei, drei oder mehr Mischkomponenten, umfassend die Schritte:
- Einfüllen einer ersten Mischkomponente (11, 111) in eine erste Kammer (9, 109) der Lager- und Mischvorrichtung (1, 100), und
- Einfüllen einer zweiten Mischkomponente (13, 113) in die erste Kammer (9, 109), wobei die erste und zweite Mischkomponente (11, 13; 111, 113) in der ersten Kammer (9, 109) voneinander getrennt angeordnet werden.

12. Verfahren nach Anspruch 11, umfassend den Schritt:
- Einsetzen eines Aktuators (5, 105a, b), der von einer Lagerstellung zum Einhalten des Lagerzustandes der Lager- und Mischvorrichtung (1,100) in eine Reaktionsstellung zum Zusammenführen der Mischkomponenten bewegbar ist, in Lagerstellung in die Lager- und Mischvorrichtung (1, 100).

13. Verfahren nach Anspruch 11 oder 12,
wobei die erste und zweite Mischkomponente (11, 13; 111, 113) in der ersten Kammer (9, 109) räumlich voneinander getrennt angeordnet werden, besonderes bevorzugt an voneinander beabstandeten Abschnitten der Kammerwand haftend; und/oder wobei die erste und zweite Mischkomponente (11, 13; 111, 113) als chemisch miteinander reagierende Mischkomponenten ausgewählt werden, deren Reaktionsprodukt einen verminderten Diffusionskoeffizienten für die erste und zweite Mischkomponente aufweist; und/oder
wobei die erste und zweite Mischkomponente (11, 13; 111, 113) unmittelbar aneinandergrenzend in der ersten Kammer (9, 109) angeordnet werden.

14. Verfahren nach einem der Ansprüche 11 bis 13, umfassend den Schritt:
- Einfüllen einer dritten Mischkomponente (17, 117) in eine zweite Kammer (15, 115) der Lager- und Mischvorrichtung (1, 100), wobei vorzugsweise die zweite Kammer (15, 115) in der Lagerstellung des Aktuators (5, 105a, b) von der ersten Kammer (9, 109) getrennt ist.

15. Verwendung einer Lager- und Mischvorrichtung zur Herstellung eines Dentalpräparats aus einer ersten Anzahl Mischkomponenten (11, 13, 17; 111, 113, 117), wobei die Lager- und Mischvorrichtung (1,100) nach einem der Ansprüche 1 bis 10 ausgebildet ist, wobei die in einem Lagerzustand voneinander getrennten, die Mischkomponenten (11, 13; 111, 113) enthaltenden Kammern (9, 15; 109, 115) einer zweiten Anzahl entsprechen, wobei die zweite Anzahl mindestens um eins kleiner ist als die erste Anzahl.

## Claims

1. A storage and mixing device, in particular a mixing and/or application capsule (1, 100), for producing a dental preparation (21, 121) comprising two, three or more mixing components (11, 13, 17; 11, 113, 117),
comprising an actuator (5, 105a, b) which is moveable from a storage position for maintaining the storage condition of the storage and mixing device into a reaction position for bringing the mixing components (11, 13, 17; 111, 113, 117) together,
wherein the storage and mixing device
- has an individual chamber or two or more chambers (9, 15; 109, 115) which are separated from each other in a storage condition and which contain the mixing components (11, 13, 17; 111, 113, 117),
**characterized in that**, in the storage condition, a first and a second mixing component (11, 13; 111, 113) and optionally one or more further mixing components are already accommodated in the individual chamber or a first chamber (9, 109) of the two or more chambers when the actuator (5, 105a, b) is still in the storage position, wherein the first and second mixing components (11, 13; 111, 113) are arranged separately from each other in the individual or the first chamber (9, 109) in the storage position of the actuator (5, 105a, b).

2. The storage and mixing device as set forth in claim 1,
wherein the first and second mixing components (11, 13; 111, 113) are arranged in the first chamber (9, 109) spatially separated from each other in the storage position of the actuator (5), preferably adhering to mutually spaced portions (12, 14) of the chamber wall.

3. The storage and mixing device (1, 100) as set forth in one of the preceding claims,
**characterized in that** the first and second mixing components (11, 13; 11, 113) are selected as mixing components which chemically react with each other and whose reaction product has a reduced diffusion coefficient for the first and second mixing components (11, 13; 111, 113).

4. The storage and mixing device (100) as set forth in claims 2 and 3,
**characterized in that** in the storage position of the actuator (105a, b) the first and second mixing components (111, 113) are arranged in directly mutually adjoining relationship in the first chamber (109).

5. The storage and mixing device (1, 100) as set forth in one of claims 2 through 4,
**characterized in that** a third component (17, 117) is accommodated in a second chamber (15, 115) which in the storage position of the actuator is separated from the first chamber, when the actuator (5, 105a, b) is still in the storage position.

6. The storage and mixing device (1) as set forth in claim 5,
**characterized in that** the actuator (5) is adapted by means of its movement from the storage position into the reaction position
to displace the third mixing component (7) out of the second chamber (15) into the first chamber (9), or
to displace the first and second mixing components out of the first chamber into the second chamber.

7. The storage and mixing device (1) as set forth in claim 6,
**characterized in that** the actuator (5) is in the form of a plunger and has a first latching position in the storage position and a second latching position in the reaction position und is preferably moveable from the reaction position into a third position for dispensing the combined mixing components (11, 13, 17).

8. The storage and mixing device (100) as set forth in claim 5,
**characterized in that** the first chamber (109) has a first outlet opening (107a) and the second chamber (115) has a second outlet opening (107b) and that the actuator (105a, b) is adapted upon a movement from the storage position into the reaction position to convey the first and second mixing components (111, 113) through the first outlet opening (107a) and the third mixing component (117) through the second outlet opening (107b).

9. The storage and mixing device (100) as set forth in claim 8,
**characterized in that** the storage and mixing device has an injection cartridge (103), within which the first and second chambers (109, 115) are arranged, wherein the actuator (105a, b) is in the form of a multiple plunger which has a plunger body for each of the chambers (109, 115) of the injection cartridge (103),
wherein preferably the injection cartridge (103) can be connected in fluid-conducting relationship to a mixing chamber (123), preferably a mixing chamber of a static mixer (120).

10. The storage and mixing device as set forth in one of the preceding claims,
comprising one or more further chambers in which two or more mixing components are respectively already arranged when the actuator is still in the storage position.

11. A process for producing a storage and mixing device as set forth in one of claim 1 through 10 for producing a dental preparation from two, three or more mixing components, including the steps:
- introducing a first mixing component (11, 111) into a first chamber (9, 109) of the storage and mixing device (1, 100), and
- introducing a second mixing component (13, 113) into the first chamber (9, 109), wherein the first and second mixing components (11, 13; 111, 113) are arranged separately from each other in the first chamber (9, 109).

12. The process as set forth in claim 11, including the step:
- inserting an actuator (5, 105a, b) moveable from a storage position for maintaining the storage condition of the storage and mixing device (1, 100) into a reaction position for bringing the mixing components together into the storage and mixing device (1, 100) in the storage position.

13. The process as set forth in claim 11 or 12,
wherein the first and second mixing components (11, 13; 111, 113) are spatially separated from each other, particularly preferably adhering to mutually spaced portions of the chamber wall, and/or
wherein the first and second mixing components (11, 13; 111, 113) are selected as mixing components which chemically react with each other and whose reaction product has a reduced diffusion coefficient for the first and second mixing components, and/or
wherein the first and second mixing components (11, 13; 111, 113) are arranged in directly mutually adjoining relationship in the first chamber (9, 109).

14. The process as set forth in one of claims 11 through 13 including the step:
- introducing a third mixing component (17, 117) into a second chamber (15, 115) of the storage and mixing device (1, 100), wherein preferably the second chamber (15, 115) is separated from the first chamber (9, 109) in the storage position of the actuator (5, 105a, b).

15. Use of a storage and mixing device for producing a dental preparation from a first number of mixing components (11, 13, 17; 111, 113, 117), wherein the storage and mixing device (1, 100) is arranged as set forth in one of claims 1 through 10 and
wherein the chambers (9, 15; 109, 115) which are separated from each other in a storage condition and which contain the mixing components (11, 13; 111, 113) correspond to a second number,
wherein the second number is smaller than the first number at least by one.

## Revendications

1. Dispositif de stockage et de mélange, en particulier capsule de mélange et/ou d'application (1, 100), pour fabriquer un matériau dentaire (21, 121) à partir de deux, trois composants de mélange (11, 13, 17 ; 111, 113, 117) ou plus,
avec un actionneur (5, 105a, b), qui peut être déplacé depuis une position de stockage pour maintenir l'état de stockage du dispositif de stockage et de mélange dans une position de réaction pour regrouper les composants de mélange (11, 13, 17 ; 111, 113, 117),
dans lequel le dispositif de stockage et de mélange
- présente une chambre individuelle ou deux chambres ou plus (9, 15 ; 109, 115) séparées les unes des autres dans un état de stockage, contenant les composants de mélange (11, 13, 17 ; 111, 113, 117),
**caractérisé en ce que** déjà un premier et un deuxième composant de mélange (11, 13 ; 111, 113) ainsi qu'éventuellement un ou plusieurs autres composants de mélange sont logés dans la chambre individuelle ou dans une première chambre (9, 109) des deux chambres ou plus quand l'actionneur (5, 105a, b) se trouve encore dans la position de stockage, dans lequel le premier et le deuxième composant de mélange (11, 13 ; 111, 113) sont disposés de manière séparée l'un de l'autre dans la chambre individuelle ou dans la première chambre (9, 109) dans la position de stockage de l'actionneur (5, 105a, b) .

2. Dispositif de stockage et de mélange selon la revendication 1
dans lequel le premier et le deuxième composant de mélange (11, 13 ; 111, 113) sont disposés de manière spatialement séparée l'un de l'autre dans la première chambre (9, 109) dans la position de stockage de l'actionneur (5, 105a, b), de préférence en adhérant à des sections (12, 14) tenues à distance les unes des autres de la paroi de chambre.

3. Dispositif de stockage et de mélange (1, 100) selon l'une quelconque des revendications précédentes, **caractérisé en ce que** le premier et le deuxième composant de mélange (11, 13, 111, 113) sont choisis en tant que composants de mélange réagissant les uns avec les autres de manière chimique, dont le produit de réaction présente un coefficient de diffusion réduit pour le premier et le deuxième composant de mélange (11, 13 ; 111, 113).

4. Dispositif de stockage et de mélange (100) selon la revendication 3,
**caractérisé en ce que** le premier et le deuxième composant de mélange (111, 113) sont disposés dans la première chambre (109) de manière à se jouxter directement dans la position de stockage de l'actionneur (105a, b).

5. Dispositif de stockage et de mélange (1, 100) selon l'une quelconque des revendications précédentes, **caractérisé en ce qu'**un troisième composant de mélange (17, 117) est logé dans une deuxième chambre (15, 115), qui est séparée de la première chambre dans la position de stockage de l'actionneur quand l'actionneur (5, 105a, b) se trouve encore dans la position de stockage.

6. Dispositif de stockage et de mélange (1) selon la revendication 5,
**caractérisé en ce que** l'actionneur (5) est mis au point pour refouler au moyen de son déplacement depuis la position de stockage dans la position de réaction le troisième composant de mélange (17) hors de la deuxième chambre (15) dans la première chambre (9), ou
pour refouler le premier et le deuxième composant de mélange hors de la première chambre dans la deuxième chambre.

7. Dispositif de stockage et de mélange (1) selon la revendication 6,
**caractérisé en ce que** l'actionneur (5) est configuré en tant que piston, et présente une première position d'enclenchement dans la position de stockage ainsi qu'une deuxième position d'enclenchement dans la position de réaction, et de préférence peut être déplacé depuis la position de réaction dans une troisième position pour distribuer les composants de mélange (11, 13, 17) regroupés.

8. Dispositif de stockage et de mélange (100) selon la revendication 5,
**caractérisé en ce que** la première chambre (109) présente une première ouverture de sortie (107a), et la deuxième chambre (115) présente une deuxième ouverture de sortie (107b), et que l'actionneur (105a, b) est mis au point pour transporter lors d'un déplacement depuis la position de stockage dans la position de réaction le premier et le deuxième composant de mélange (111, 113) à travers la première ouverture de sortie (107a) et pour transporter le troisième composant de mélange (117) à travers la deuxième ouverture de sortie (107b).

9. Dispositif de stockage et de mélange (100) selon la revendication 8,
**caractérisé en ce que** le dispositif de stockage et de mélange présente une cartouche de seringue (103), à l'intérieur de laquelle la première et la deuxième chambre (109, 115) sont disposées, dans lequel l'actionneur (105a, b) est réalisé en tant qu'un piston multiple, qui présente pour chacune des chambres (109, 115) de la cartouche de seringue (103) un corps de piston,
dans lequel de préférence la cartouche de seringue (103) peut être reliée avec acheminement de fluide à une chambre de mélange (123), de préférence à une chambre de mélange d'un mélangeur statique (120).

10. Dispositif de stockage et de mélange selon l'une quelconque des revendications précédentes,
avec une ou plusieurs autres chambres, dans lesquelles respectivement deux composants de mélange ou plus sont déjà disposés quand l'actionneur se trouve encore dans la position de stockage.

11. Procédé pour fabriquer un dispositif de stockage et de mélange selon l'une quelconque des revendications 1 à 10, pour la fabrication d'un matériau dentaire à partir de deux, trois composants de mélange ou plus, comprenant les étapes :
- de transvasement d'un premier composant de mélange (11, 111) dans une première chambre (9, 109) du dispositif de stockage et de mélange (1, 100), et
- de transvasement d'un deuxième composant de mélange (13, 113) dans la première chambre (9, 109), dans lequel le premier et le deuxième composant de mélange (11, 13 ; 111, 113) sont disposés de manière séparée l'un de l'autre dans la première chambre (9, 109) .

12. Procédé selon la revendication 11, comprenant l'étape :
- d'insertion d'un actionneur (5, 105a, b), qui peut être déplacé depuis une position de stockage pour maintenir l'état de stockage du dispositif de stockage et de mélange (1, 100) dans une position de réaction pour regrouper les composants de mélange, en position de stockage dans le dispositif de stockage et de mélange (1, 100).

13. Procédé selon la revendication 11 ou 12,
dans lequel le premier et le deuxième composant de mélange (11, 13 ; 111, 113) sont disposés de manière spatialement séparée l'un de l'autre dans la première chambre (9, 109), de manière particulièrement préférée en adhérant à des sections tenues à distance les unes des autres de la paroi de chambre ; et/ou
dans lequel le premier et le deuxième composant de mélange (11, 13 ; 111, 113) sont choisis en tant que composants de mélange réagissant entre eux de manière chimique, dont le produit de réaction présente un coefficient de diffusion réduit pour le premier et le deuxième composant de mélange ; et/ou
dans lequel le premier et le deuxième composant de mélange (11, 13 ; 111, 113) sont disposés de manière à se jouxter directement dans la première chambre (9, 109).

14. Procédé selon l'une quelconque des revendications 11 à 13, comprenant l'étape :
- de transvasement d'un troisième composant (17, 117) dans une deuxième chambre (15, 115) du dispositif de stockage et de mélange (1, 100), dans lequel de préférence la deuxième chambre (15, 115) est séparée de la première chambre (9,109) dans la position de stockage de l'actionneur (5, 105a, b).

15. Utilisation d'un dispositif de stockage et de mélange pour fabriquer un matériau dentaire à partir d'un premier nombre de composants de mélange (11, 13, 17 ; 111, 113, 117), dans laquelle le dispositif de stockage et de mélange (1, 100) est réalisé selon l'une quelconque des revendications 1 à 10, dans lequel les chambres (9, 15 ; 109, 115) séparées les unes des autres dans un état de stockage, contenant les composants de mélange (11, 13 ; 111, 113) correspondent à un deuxième nombre,
dans lequel le deuxième nombre est au moins inférieur de 1 au premier nombre.
